# EUROPEAN PATENT SPECIFICATION

(11) **EP 0 697 914 B1**
(45) Date of publication and mention of the grant of the patent: **04.08.1999**
(21) Application number: 94916454.5
(22) Date of filing: 11.05.1994
(51) Int. Cl.: B01J 35/06, B01J 32/00, B01D 53/94

(54) **A CATALYTIC SYSTEM AND ITS USE**
KATALYSATORSYSTEM UND IHRE ANWENDUNG
SYSTEME CATALYTIQUE ET SON UTILISATION

(30) Priority: 14.05.1993 SE 9301653
(43) Date of publication of application: 28.02.1996
(73) Proprietor: FILTERPRODUKTER AB, S-576 60 Österbymo (SE)
(72) Inventor: FALK, K., A., Jerker, S-570 60 Österbymo (SE); Falk Mauritz, S-57333 Tranas (SE)
(74) Representative: Lundin, Björn-Eric
(86) International application number: SE9400439
(87) International publication number: WO9426412

(56) References cited:
- WO-A-92/02301
- US-A- 2 334 263
- US-A- 3 362 783
- US-A- 4 958 491
- PATENT ABSTRACTS OF JAPAN, Vol. 8, No. 172, C-237; & JP,A,59 073 053 (MATSUSHITA DENKI SANGYO K.K.), 25 April 1984 (25.04.84).

## Description

The present invention relates to a gas cleansing catalytic system according to the preamble of Claim 1 for use in internal combustion engines, and in particular in smaller and/or simpler engines, such as those used with lawn mowers, motor saws, mopeds and like engine-driven units.

Exhaust gases from internal combustion engines are cleaned with the aid of catalytic systems, which include a catalytic unit comprising a catalyst carrier on which a suitable catalytic substance is applied, for instance platinum and/or palladium, which are the substances most commonly used, although organic materials are also used.

Such catalytic systems were first used to cleanse the exhaust gases of private cars, since in the 1970s and 1980s the U.S.A. in particular placed high demands on the elimination of noxious substances from the exhaust gases of private cars. The catalytic systems fitted to private cars use carriers of ceramic material, so-called monoliths which include through-penetrating passages in which the catalytic substance is applied. High requirements are placed on the catalytic units of catalytic systems with regard, among other things, to their heat-resistance, since exhaust gases from internal combustion engines may reach temperatures of about 1,000°C.

The catalytic units intended for the engines of private cars are relatively expensive because of the high degrees of purification that they are expected to attain and, among other things, because the catalyst carrier must be comprised of an advanced ceramic material which is extremely fragile and therewith difficult to handle during manufacture of the carrier. As a result, the majority of the ceramic carrier units produced have to be scrapped, which greatly adds to the already high manufacturing costs.

The use of a metal catalyst carrier has therefore been proposed in less advanced engines with which the demands on pure exhaust emissions are not so high. Such catalyst carriers are used today in some makes of scooter for instance. In this case, the catalyst carrier is comprised of a metal sheet which is corrugated and rolled to a cylindrical shape with the corrugations forming through-penetrating passages. A metal-retaining sleeve is placed around the cylinders. One drawback with this carrier, however, is that its surface area is restricted in relation to its volume and mass. The carrier is also relatively expensive.

It has also been proposed to construct catalyst carriers for catalytic units from woven or knitted metal wire. DE-A-3,024,491 (CA-A-1,165,247) describes an engine that is fitted with a catalytic system whose catalyst carrier is comprised of knitted metal wire and which carries two layers of metal oxide and catalyst respectively. EP-A-0,061,304 also teaches a knitted wire catalyst carrier which includes interspaces so as to obtain a catalytic unit of shape-stable construction when in a rolled form, for instance. The use, for instance, of knitted fabric corn-prized of heat-durable metal wire of the type Inconel® for catalytic units was proposed in US-A-3,362,783 in the 1960s.

Despite the aforementioned drawbacks associated with other types of catalyst carriers, none of the proposed catalyst carriers based on woven or knitted metal fabric has hitherto been used in practice and neither have such carriers been available commercially as far as is known, but that the catalyst carriers at present available commercially are manufactured exclusively from ceramic materials or, for certain special purposes, from corrugated and rolled metal sheet, as before mentioned. One reason why metal wire fabric has been unable to compete with the conventional catalyst carriers in spite of all the problems associated with conventional carriers, not least the economic problems indicated above, would seem to be because metal wire fabric catalytic units do not fulfil the technical requirements placed thereupon. Because of their open-mesh structure, with a high degree of air space between the wire stitches, such carriers have low resistance to the flow of the gas to be cleaned. Consequently, the relative exposure time of the gas in the catalytic unit, i.e. the time taken for the gas to flow through one unit length of the catalytic unit is so short that these unit lengths must be made very long in relation to their cross-sectional areas, in order to cleanse the exhaust gases to a sufficiently high degree. Although a relatively long gas exposure time can be obtained by increasing the mechanical packing of the layers of metal wire fabric this will increase obstruction of the gases flowing through the catalytic unit and therewith reduce the gas throughflow rate, making it necessary to increase the throughflow area of the unit and resulting in more voluminous units.

It has been recently observed that smaller and simpler internal combustion engines contribute seriously to the discharge of noxious exhaust gases. It has even been maintained that the exhaust from lawn mowers is greater and more serious than the exhaust from motor vehicles, although it has not yet been stipulated that the exhaust gases from such engines, or motors, must be cleaned.

This is probably because at the present time there is no technical and economically viable possibility of employing catalytic purification of the exhausts from such engines, particularly when seen against the background of the high costs of the known catalyst carriers.

The object of the invention is to provide a catalytic system which will solve the aforementioned problems relating to the emission of exhaust gases, particularly the exhaust gases from small and/or simple internal combustion engines, and also to provide a catalytic unit which can be used as an inexpensive alternative with other engines. To this end, the invention is characterized by a catalytic unit having the characteristic features set forth in the following Claims.

The inventive catalytic unit thus includes a heat-resistant metal wire open-mesh knitted or woven metal fabric which is adapted to form a pack of predetermined shape comprising several mutually adjacent layers, and a pack casing which forms gas throughflow passages. The inventive catalytic unit is characterized in that at least half of the layers in the metal fabric pack are comprised essentially of metal fabric which has been corrugated essentially continuously in at least two directions so that the corrugations will define angles therebetween. The corrugated metal fabric is arranged in the pack so that the apices of said angles will point in a direction transversely to the direction of the throughflow passages. Arranged between the layers of corrugated metal fabric are layers of non-corrugated metal fabric. At least the corrugated metal fabric is conveniently knitted or woven with at least two parallel wires or threads. The adjacent layers may be produced conveniently by rolling the metal fabric to form an essentially cylindrical pack. Alternatively, the metal fabric may be corrugated or pressed to a non-cylindrical pack, for instance a parallelepipedic pack.

The heat-durable metal wire is preferably comprised of a material according to 1.4767 (DIN) or some other material of corresponding heat resistance, such as Inconel® 601 for instance.

The inventive catalytic unit is particularly suitable for cleaning the exhaust gases of small and/or simple internal combustion engines, such as the engines, or motors, of lawn mowers, motor saws, mopeds and small outboard motors. In the case of such engines, it is important that the cost of the catalytic system does not constitute an excessively large percentage of the total price, and consequently in order for the manufacturer to include a catalytic exhaust purifying system in the machine concerned, there must be used an inexpensive catalyst carrier.

By corrugating the metal fabric in the manner specified in accordance with the invention, there is achieved surprisingly effective and thorough turbulence of the gas that passes through the catalytic unit. This contributes favourably in extending the relative gas exposure tide and therewith provides higher efficiencies than would otherwise be achieved with metal fabric carriers in catalytic units. The high degree of turbulence afforded by the inventive catalytic unit enables the units to be made shorter while still effectively cleaning the gases. The invention thus provides at reasonable costs a catalytic unit of reasonable proportions which is particularly suitable for use in simpler types of engines and motors, as before indicated.

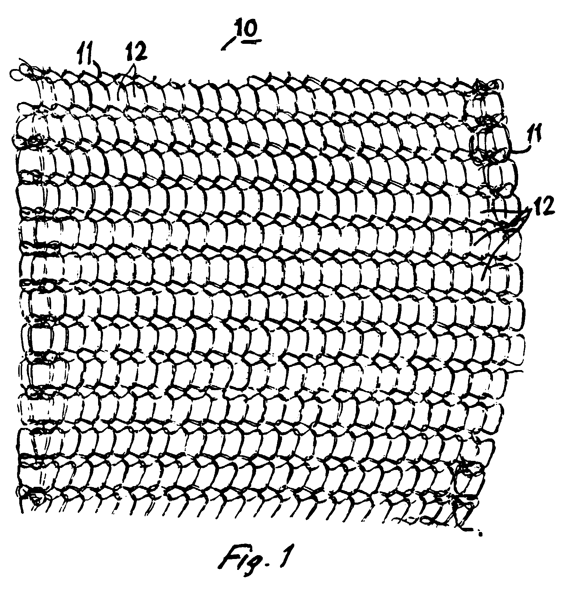

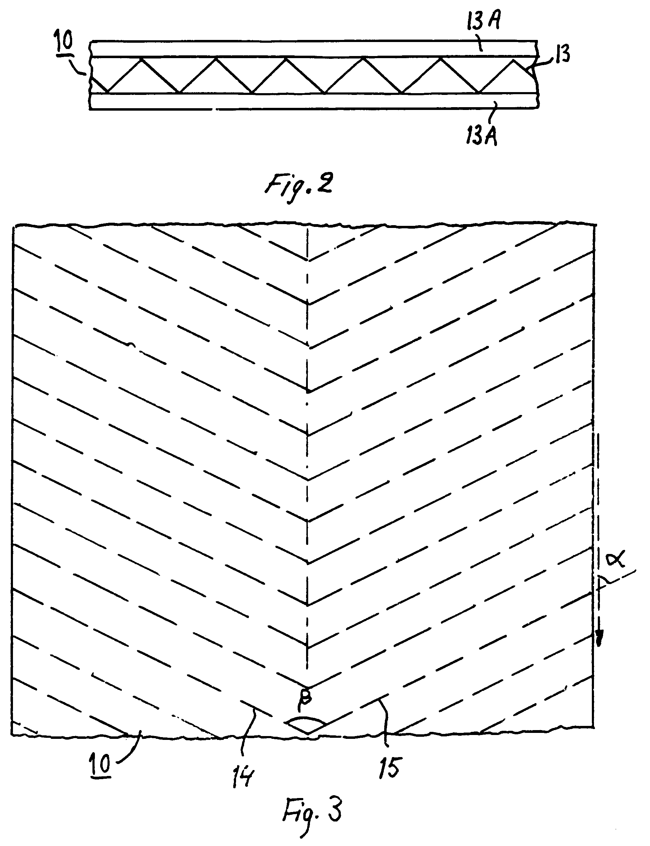

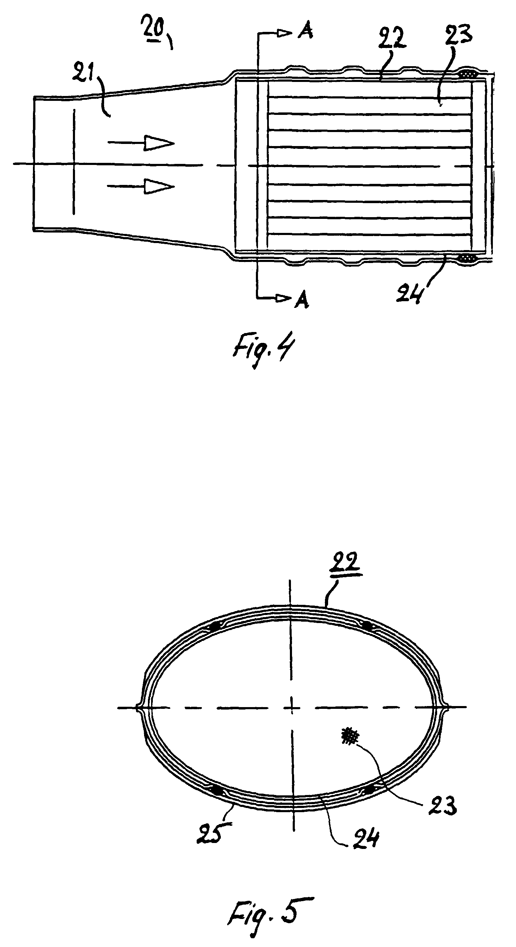

The invention will now be described in more detail with reference to the accompanying drawings, in which Figure 1 illustrates a metal fabric blank in natural size; Figure 2 is a side view of a corrugated or similarly folded metal fabric blank; Figure 3 shows the same corrugated metal fabric blank from above; Figure 4 illustrates an inventive catalytic unit schematically and in side view; and Figure 5 is a sectional view taken on the line A-A in Figure 4.

Figure 1 illustrates a metal fabric blank 10 which is shown in its natural size and which is knitted from heat-resistant metal wire 11 in an open mesh configuration as shown at 12. The metal wire has a thickness of about 0.2 mm. The metal fabric blank 10 is particularly suited for use as a catalyst carrier in accordance with the invention. Figure 2 illustrates a metal fabric blank 10 that has been corrugated or likewise folded to provide alternating ridges and troughs, as illustrated schematically by the line 13. In the illustrated case, the corrugated metal fabric layer 10 is covered on both sides thereof by a respective non-corrugated layer 13A. The corrugations will preferably have a wave height of 5-10 mm, for instance 7 mm. Figure 3 illustrates schematically part of a web of the corrugated fabric 10, as seen from above. The metal fabric 10 is corrugated along lines 14 and 15 after having been knitted, said lines defining a predetermined angle α with the longitudinal axis of the web. The corrugations extending along the lines 14 and 15 meet one another in roughly the centre of the web and there define mutually an angle β. The angle β is conveniently about 110°, which results in good gas turbulence. Figure 4 illustrates a catalytic unit 20 which comprises an inlet part 21 for the gases to be cleaned, and a catalyst part 22. The catalyst part 22 accommodates a catalyst carrier pack 23 which is embraced by a catalyst carrier casing 24 made of heat-resistant metal. The catalytic unit 20 may have any one of a number of cross-sectional shapes, and may, for instance, be square, round or oval in cross-section, depending on the wishes of the user and also on the application for which the catalytic system is intended. The catalyst carrier pack 23 comprises a catalyst carrier which includes an open mesh metal fabric knitted from heat-resistant metal wire in accordance with the invention and coated with an appropriate catalytic substance. Figure 5 is a sectional view of the catalyst part 22 taken on the line A-A in Figure 4. The illustrated catalyst part 22 has an oval cross-section and includes a catalyst carrier pack 23 which has been given the same profile as the catalyst carrier casing 24 and the outer casing 25 of the catalyst part 22. The inventive catalytic unit affords important advantages in addition to the aspect of cost. For instance, the unit has a large specific surface area in relation to its volume and mass and also creates a high degree of turbulence in the gas flow, which extends the gas-cleaning time, despite a relatively low flow resistance.

## Claims

1. A gas-cleaning catalytic unit (20) having a carrier, which comprises an open mesh knitted or woven fabric produced from heat-resistant metal wire (11) and shaped to a pack (23) of predetermined form having a plurality of adjacent metal fabric layers, and a casing (24, 25) which surrounds the pack (23) and forms gas throughflow passages, **characterized** in chat at least half of the layers in the metal fabric pack (23) are comprised of a metal fabric web (10) which has corrugations (13) extending along two sets of lines (14, 15) defining predetermined angles α with the longitudinal axis of the web (10), said corrugations lines (14, 15) meeting one another in roughly the centre of the web (10) defining mutually an angle β, and in that the corrugated metal fabric web (10) is so arranged in the pack (23) that the apex of said angle β will point in a direction transversely to the direction of the throughflow passages.

2. A unit according to Claim 1, characterized in that the unit (20) includes a layer of non- corrugated metal fabric (13A) between the corrugated fabric layers (13).

3. A unit according to Claim 1 and Claim 2, characterized in that at least the corrugated metal fabric is knitted or woven with at least two parallel wires.

4. A unit according to Claims 1-3, characterized in that the metal fabric is rolled to a generally cylindrical pack form.

5. A unit according to Claims 1-3, characterized in that the metal fabric is folded or pressed to form a non-cylindrical pack.

6. A unit according to Claims 1-5, characterized in that the heat-resistant metal wire is comprised of Inconel® 601 or a material according to 1.4767 (DIN).

7. A catalytic unit according to claims 1-6 for use in cleaning exhaust gases from small internal combustion engines, such as lawn mowers, motor saws, mopeds and outboard motors.

## Patentansprüche

1. Katalytische Gasreinigungsvorrichtung (20) mit einem Träger, der ein offenmaschiges Gestrick oder Gewebe, welches aus hitzebeständigem Metalldraht (11) erzeugt ist und zu einem Paket (23) vorbestimmter Form mit mehreren einander benachbarten Metallmaschenwareschichten geformt ist, und ein Gehäuse (24, 25) welches das Paket (23) umgibt und Gasdurchflußdurchlässe bildet, umfaßt, **dadurch gekennzeichet**, daß wenigstens die Hälfte der Schichten in dem Metallmaschenwarenpaket (23) eine Metallmaschenwarenbahn (10) umfaßt, weiche Wellenbildungen (13) hat, die sich entlang zweier Liniengruppen (14, 15) erstrecken, welche vorbestimmte Winkel α mit der Längsachse der Bahn (10) einschließen, wobei die Wellenbildungslinien (14, 15) ungefähr in der Mitte der Bahn (10) aufeinandertreffen und miteinander einen Winkel β einschließen, und daß die gewellte Metallmaschenwarenbahn (10) so in dem Paket (23) angeordnet ist, daß der Scheitel des Winkels β in eine Richtung quer zu der Richtung der Durchflußdurchgänge weist.

2. Vorrichtung nach Anspruch 1, **dadurch gekennzeichnet**, daß die Vorrichtung (20) eine Schicht von nichtgewellter Metallmaschenware (13a) zwischen den gewellten Maschenwareschichten (13) einschließt.

3. Vorrichtung nach Anspruch 1 und 2, **dadurch gekennzeichnet**, daß wenigstens die gewellte Metallmaschenware mit wenigstens zwei parallelen Drähten gestrickt oder gewebt ist.

4. Vorrichtung nach den Ansprüchen 1 bis 3, **dadurch gekennzeichnet**, daß die Metallmaschenware zu einer allgemein zylindrischen Paketform aufgerolft ist.

5. Vorrichtung nach den Ansprüchen 1 bis 3, **dadurch gekennzeichnet**, daß die Metallmaschenware unter Bildung eines nichtzylindrischen Paketes gefaltet oder gepreßt ist.

6. Vorrichtung nach den Ansprüchen 1 bis 5, **dadurch gekennzeichnet**, daß der hitzebeständige Metalldraht Inconel® 601 oder ein Material gemäß 1.4767 (DIN) umfaßt.

7. Katalytische Vorrichtung nach den Ansprüchen 1 bis 6 für die Verwendung bei der Reinigung von Abgasen aus kleinen Verbrennungsmotoren, wie von Rausenmähern, Motorsägen, Mopeds und Außenbordmotoren.

## Revendications

1. Unité catalytique de nettoyage de gaz (20) ayant un support qui comprend un tissu entrelacé ou tissé à maille ouverte produit à base de fil métallique résistant à la chaleur (11) et adapté à la forme d'un paquet (23) ou d'une forme prédéterminée avec plusieurs couches de tissu métallique adjacentes, et d'une emboîture (24, 25) qui recouvre le paquet (23) et forme les passages du gaz, caractérisée en ce qu'au moins la moitié des couches de tissu métallique du paquet (23) est comprise d'une bande de tissu métallique (10) qui possède des striures (13) s'étendant le long de deux groupes de lignes (14, 15) définissant des angles prédéterminés par rapport à l'axe longitudinal de la bande (10), les dites lignes striées (14, 15) se rejoignant approximativement au centre de la bande (10) définissant réciproquement un angle β, et en ce que la bande de tissu métallique striée (10) se trouve disposée sur le paquet (23) de telle sorte que le sommet du dit angle β vise dans une direction transversale à la direction des passages du gaz.

2. Unité selon la revendication 1, caractérisée en ce que l'unité (20) inclut une couche de tissu métallique qui n'est pas striée (13A) entre les couches de tissu strié (13).

3. Unité selon la revendication 1 et la revendication 2, caractérisée en ce que le tissu métallique strié est entrelacé ou tissé avec au moins deux fils métalliques parallèles.

4. Unité selon les revendications 1-3, caractérisée en ce que le tissu métallique est enroulé à un paquet généralement de forme cylindrique.

5. Unité selon les revendications 1-3, caractérisée en ce que le tissu métallique est plié ou pressé pour former un paquet qui n'est pas cylindrique.

6. Unité selon les revendications 1-5, caractérisée en ce que le fil métallique résistant à la chaleur est compris d'Inconel® 601 ou un matériel semblable selon 1.4767 (Din).

7. Unité catalytique selon les revendications 1-6 pour être utilisée pour le nettoyage de gaz d'échappement de petits moteurs à combustion interne, tels que les moteurs des tondeuses à gazon, des scies électriques, des cyclomoteurs et les moteurs hors-bord.
